# FASCICULE DE BREVET EUROPEEN

(11) **EP 2 180 813 B1**
(45) Date de publication et mention de la délivrance du brevet: **14.12.2011**
(21) Numéro de dépôt: 08829771.8
(22) Date de dépôt: 16.07.2008
(51) Int. Cl.: A47J 42/14, A47J 47/01, A47G 19/34, A47J 43/25

(54) **DISPOSITIF DE DISTRIBUTION DE FINES HERBES SURGELEES**
VORRICHTUNG ZUR AUSGABE TIEFGEFRORENER KRÄUTER
DEVICE FOR DISPENSING DEEP-FROZEN HERBS

(30) Priorité: 01.08.2007 FR 0705605
(43) Date de publication de la demande: 05.05.2010
(73) Titulaire: Nitzel, Eric, 49330 Miré (FR)
(72) Inventeur: Nitzel, Eric, 49330 Miré (FR)
(74) Mandataire: Tournel, Jean Louis
(86) Numéro de dépôt international: PCT/FR2008/001038
(87) Numéro de publication internationale: WO 2009/030828

(56) Documents cités:
- BE-A- 412 673
- BE-A6- 1 014 764

## Description

L'invention se rapporte à un dispositif de distribution de fines herbes surgelées éventuellement non fragmentées.

L'utilisation des fines herbes dans les plats est croissante ces dernières décennies. La présence d'un congélateur dans de nombreux foyers permet de les stocker et de les conserver un temps non négligeable sans que ces fines herbes ne perdent leurs goûts.

Il est ainsi connu de fractionner ces fines herbes en petits morceaux surgelés et de les placer dans un contenant simple tel qu'une boite en carton, ce contenant disposant d'un bec verseur.

On constate malheureusement que dès que l'on ouvre pour la première fois l'emballage, il se produit un effet d'agglomération des petits morceaux.

Ce phénomène est en partie lié à la condensation de la vapeur d'eau de la cuisine sur les petits morceaux de fines herbes puis recongélation.

Ce phénomène est également lié au fait que les fines herbes sont conditionnées divisées et foisonnées et que ces petits morceaux essentiellement composés d'eau décongèlent rapidement contrairement à un bloc massif de matière tel de la viande.

Les petits morceaux adhérent les uns aux autres pour former des blocs en raison de cette vapeur d'eau qui cristallise après remise du contenant dans le congélateur

On a donc imaginé que ce phénomène pouvait être ralenti si les fines herbes n'étaient pas fractionnées et si on pouvait limiter le contact des fines herbes surgelées avec l'atmosphère ambiant de la cuisine lors de l'utilisation du contenant.

A ce jour, on ne connait pas de dispositif de distribution adapté à ce type de produit non fragmenté.

Certes, on connait les moulins à poivre, mais le principe est d'écraser les grains durs avec une meule conique. Un tel dispositif ne convient pas car rapidement les fines herbes seraient écrasées et non coupées en petit morceaux.

On connait un dispositif FR 2 542 184 pour distribuer des copeaux de beurre provenant d'un bloc monolithique de beurre réfrigéré ou congelé.

Ce dispositif comprend à sa base une râpe guidée en rotation sur un corps cylindrique, cette râpe (rotor) étant actionnée par un arbre vertical. Cet arbre vertical qui est actionné en sa partie supérieure par une poignée de manoeuvre est pourvu d'un filetage entrainant un piston intermédiaire venant pousser le morceau de beurre. Le piston est calé en rotation sur le corps afin que la rotation de la vis le déplace verticalement sous l'effet de rotation de la vis et pousse la motte de beurre contre la râpe. On notera que la paroi supérieure est fixe par rapport au corps (stator) et comporte un perçage servant à guider en rotation l'extrémité haute de la vis d'entrainement.

Pour placer le beurre dans le compartiment, il est nécessaire de dégager l'ensemble râpe, vis et piston du corps pour introduire ensuite entre la râpe et le piston le bloc de beurre et remettre l'ensemble dans le corps depuis le dessous ce qui n'est pas un mouvement évident. On comprend bien que lorsque cet ensemble précité est sorti du corps, s'il est possible de poser sur la râpe un corps monolithique et de le maintenir le temps nécessaire à la remise en place, cette manoeuvre est impossible avec des brins de fines herbes. On connait également BE1014764 pour du fromage.

Un des résultats que vise l'invention est notamment de remédier à ce problème.

A cet effet, l'invention a pour objet un dispositif de distribution fragmentée de fines herbes surgelées comprenant à la base un rotor pourvu d'une grille de coupe guidé en rotation sur un stator formant un corps creux délimitant une chambre apte à loger les fines herbes, un piston verrouillé en rotation sur le stator et coopérant avec une vis d'entrainement solidaire en rotation du rotor pour pousser les fines herbes vers la grille, le dispositif étant caractérisé en ce que le haut du stator est fermé par un couvercle amovible et le piston comporte des moyens permettant de bloquer le dit piston en rotation sur le stator tout en l'accouplant avec la vis d'entrainement sans déplacer axialement la vis d'entrainement pour l'extraire du stator.

L'invention sera bien comprise à l'aide de la description ci-après faite à titre d'exemple non limitatif en regard du dessin qui représente
FIG 1 : Vue en éclatée de la partie supérieure (stator) du dispositif vue selon une direction ascendante
FIG 2 : Vue en éclatée de la partie supérieure du dispositif vue selon une direction descendante
FIG 3 : Vue en éclatée de la partie inférieure (rotor) du dispositif vue selon une direction ascendante
FIG 4 : Vue en éclatée de la partie inférieure (rotor) du dispositif vue selon une direction descendante.

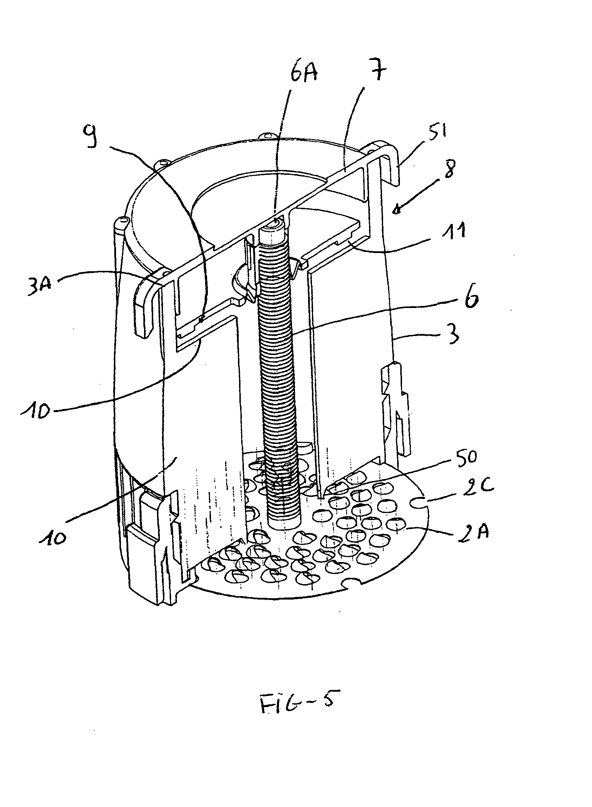

FIG 5 : Vue en perspective d'une coupe axiale du dispositif.

En se reportant au dessin, on voit un dispositif de distribution de fines herbes surgelées non fragmentées. Ce dispositif est en matière plastique (faiblement déformable) et est destiné à être placé dans un congélateur. De préférence, il sera au moins localement transparent pour visualiser le contenu.

Ce dispositif 1 comprend à la base un rotor 2 pourvu d'une grille 2A de coupe guidé en rotation sur un stator 3 formant un corps creux délimitant une chambre 4 apte à loger les fines herbes, un piston 5 verrouillé en rotation sur le stator 3 et coopérant avec une vis 6 d'entrainement solidaire en rotation du rotor.

Comme on le voit, la grille 2A est verrouillée sur le corps 2B du rotor au moyen d'encoches 2C et de bossage 2D. Le rotor et la grille peuvent ne constituer qu'une seule pièce.

Lorsque la vis tourne, entrainée par le rotor, le piston pousse les herbes vers la grille de coupe.

Selon l'invention, le haut du stator 3 est fermé par un couvercle 7 amovible découvrant ainsi le piston et le piston comporte des moyens 8 permettant de bloquer le dit piston en rotation sur le stator tout en l'accouplant avec la vis d'entrainement sans déplacer axialement la vis d'entrainement pour l'extraire du stator. Le piston est inséré depuis le dessus par exemple par vissage. Dans cet exemple le piston et le stator sont à section circulaire.

Dans la formé de réalisation représentée, les moyens d'accouplement et de blocage en rotation sont un filet de vis combiné avec des butés radiales.

Le couvercle peut être un simple film thermoscellable.

Pour placer les herbes, on retire le couvercle, on désaccouple le piston de la vis en extrayant le piston par rotation et déformation élastique depuis le dessus, on place les fines herbes, on replace le piston et on remet le couvercle. L'accès au piston peut être facilité si on désaccouple le rotor du stator.

Dans la forme de réalisation représentée, le piston est de section circulaire. Egalement, le sommet 6A de la vis se situe au niveau ou sous le bord supérieur 3A du stator.

Avantageusement, le verrouillage en rotation du piston sur le stator est réalisé à distance du sommet de la vis d'entrainement, cette distance étant suffisante pour que le piston engrène suffisamment avec le filet de la vis.

Le blocage en rotation du piston se fait par rotation du piston et engagement d'au moins une encoche 9 dans la périphérie du piston avec une ailette 10 radiale qui s'étend depuis la face interne cylindrique de révolution du stator, cet engagement étant obtenu notamment par déformation élastique de la grille de coupe. On a représenté deux ailettes diamétralement opposées et donc deux encoches.

Ces ailettes ont pour fonction d'immobiliser en rotation, le piston, mais également les fines herbes afin que la grille coupe les dites fines herbes.

Ces ailettes sont d'étendue de l'ordre d'au moins un tiers de rayon.

Il est prévu un pré-engagement du verrouillage en rotation au moyen de bossages 11 de faible étendu prévus sur la face interne 5A du piston (face dirigée vers la grille de coupe).

L'engagement de ces bossages est obtenu par le jeu de fonctionnement et la déformation élastique de la grille 2A de coupe et/ou comme on le verra plus tard par la déformation du piston.

Ainsi, le piston est engagé sur la vis par un mouvement de rotation jusqu'à atteindre le contact entre les bossages 11 et les ailettes 10, la poursuite du mouvement vient alors engager les bossages avec les ailettes (par déformation élastique de la grille) et ainsi verrouiller en rotation le piston. La rotation du rotor va alors permettre d'insérer les ailettes dans les encoches 9. La combinaison de ces moyens permet d'engager la vis par rotation du piston puis d'obtenir le verrouillage en rotation.

On pourrait supprimer les bossages mais, on devrait augmenter la largeur des encoches par rapport à l'épaisseur des ailettes et jouer sur le jeu de fonctionnement avec un risque plus élevé de coincement.

Pour faciliter la mise en place du piston sur la vis, on peut prévoir sur le dessus un bossage de préhension qui permet d'allonger le filetage interne, ce bossage 20 étant traversé par la vis.

Les ailettes ont vocation à bloquer les fines herbes lorsqu'on manoeuvre le rotor.

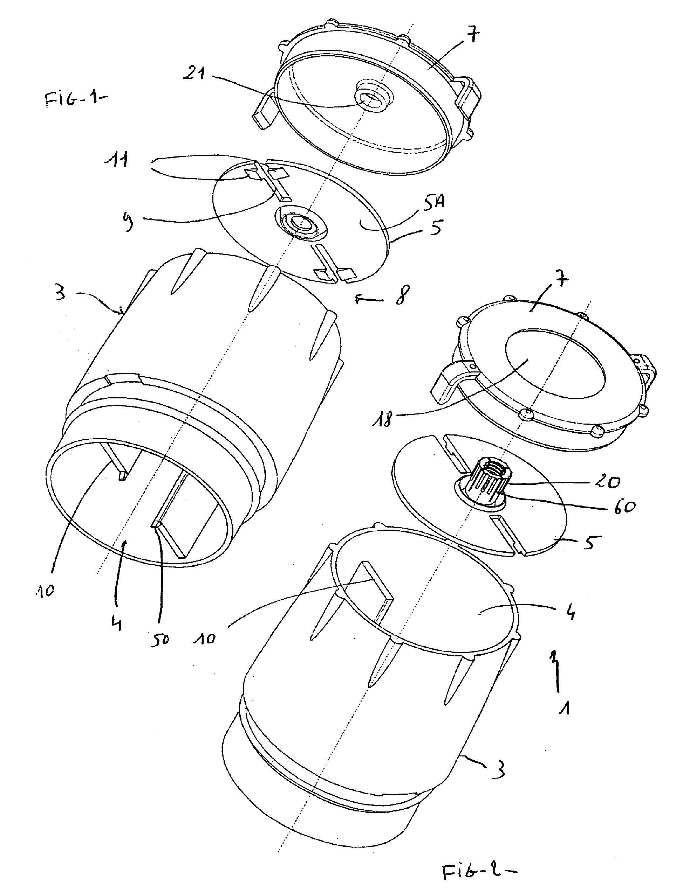

Au lieu et place de ces moyens, le piston peut être équipé d'un écrou scindé (écrou tulipe (voir les fentes 60 sur la figure 2)) selon l'axe de rotation en au moins deux parties pouvant être écartées pour coulisser librement sur la vis puis rapprochées pour que le filet de l'écrou coopère avec le filet de la vis.

On peut également concevoir une vis et un écrou avec des filets de vis élastiquement déformables qui au-delà d'une contrainte donnée autorisent un glissement axial.

Un élément important est le dimensionnement du dispositif. En effet, il doit occuper le moins de place possible tout en ayant une capacité importante. On doit également tenir compte de la hauteur disponible entre deux rayons d'un congélateur armoire.

Le mécanisme doit être le plus compact. Les deux systèmes d'encliquetage décrits précédemment permettent d'optimiser le volume. Le volume mort se limite sensiblement à la hauteur du filet de vis que présente l'écrou. Il faut que ce filet de vis soit suffisamment engagé sur la vis pour exercer une pression suffisante.

Le piston sert à pousser les fines herbes et à réduire le volume d'air donc les échanges gazeux entre les fines herbes et l'air d'où une meilleurs conservation.

On notera que la section du piston est quasi identique à celle de la grille de coupe et du stator ce qui limite la perte de place par rapport à un stator à section polygonale qui nécessiterait à la base une section circulaire débordante.

Le piston peut présenter en périphérie une jupe (non représentée) permettant d'épouser au mieux la paroi interne du stator pour l'étanchéité et éviter les problèmes de blocage.

Ce piston peut également être apte à se déformer élastiquement sous l'action d'une force perpendiculaire au plan du piston. En effet, avec un système à vis le déplacement du piston est directement proportionnel au nombre de tour de vis. En prévoyant un piston déformable, on peut, lorsque le contact est établi et en fonction de la résistance, limiter la pression sur les fines herbes. La déformation du piston permet également l'engagement des encoches 9 radiales sur les ailettes.

Le filet de la vis peut s'interrompre avant la grille de coupe (pour arrêter le piston avant contact avec la grille) et/ou avant le sommet de la vis (pour faciliter le positionnement du piston sur la vis).

Dans la version représentée, le dessous du couvercle 7 présente une empreinte 21 de guidage pour loger l'extrémité de la vis de sorte que la vis n'exerce aucune force axiale sur le couvercle. Cette empreinte contribue au positionnement axial de la vis et évite le désaxage. Le dessus du couvercle peut comporter également une empreinte 18 pour identifier le produit contenu.

L'assemblage du corps du rotor avec le stator peut se faire par clipsage axial (gorge et lèvre ou patte et empreinte).

Des zones éventuellement de déformation radiale permettront de désaccoupler le rotor du stator. On pourra alors changer la lame de coupe pour l'adapter au produit à distribuer. Dans une version jetable, il n'est pas utile de se préoccuper de ce démontage

Des reliefs sur la face externe du rotor et du stator permettront une meilleure prise en main.

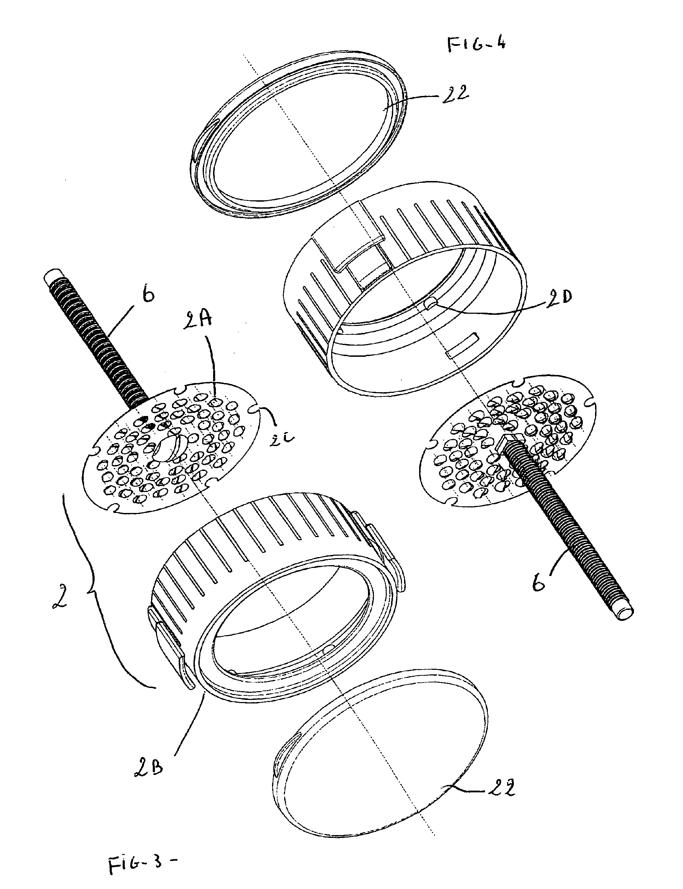

Comme, on l'aperçoit sur les figures 3 et 4, un couvercle inférieur 22 ferme la base du dispositif pour confiner les fines herbes hermétiquement dans l'appareil. On peut imaginer que ce couvercle forme un support.

On notera que la base des ailettes forme un contre couteau pour les dents de la grille de coupe. Pour éviter que cette grille ne se déforme vers ces ailettes sous l'effet de la vis agissant sur le piston et se rapproche du bord inférieur des ailettes, il a été prévu au moins un ergot 50 maintenant la grille à distance.

Le stator ou le couvercle supérieur pourront présenter un crochet 51 pour le suspendre au panier du congélateur.

Cet appareil pourrait être utilisé pour d'autres produits que les fines herbes.

## Revendications

1. Dispositif de distribution fragmentée de fines herbes surgelées comprenant à la base un rotor (2) pourvu d'une grille (2A) de coupe guidé en rotation sur un stator (3) formant un corps creux délimitant une chambre (4) apte à loger les fines herbes, un piston (5) verrouillé en rotation sur le stator et coopérant avec une vis d'entraînement solidaire en rotation du rotor pour pousser les fines herbes vers la grille, le dispositif étant **caractérisé en ce que** le haut du stator est fermé par un couvercle (7) amovible et le piston comporte des moyens (8) permettant de bloquer le dit piston en rotation sur le stator tout en l'accouplant avec la vis d'entrainement sans déplacer axialement la vis d'entrainement pour l'extraire du stator.

2. Dispositif de distribution selon la revendication 1 **caractérisé en ce que** le blocage en rotation du piston se fait par rotation du piston et engagement d'au moins une encoche (9) ménagée dans la périphérie du piston avec une ailette (10) radiale qui s'étend depuis la face interne cylindrique de révolution du stator, cet engagement étant obtenu par déformation élastique.

3. Dispositif de distribution selon la revendication 2 **caractérisé en ce que** la face (5A) interne du piston présente des bossages (11) pour un pré-engagement du verrouillage en rotation.

4. Dispositif de distribution selon la revendication 1 **caractérisé en ce que** le piston est équipé d'un écrou scindé en au moins deux parties pouvant être écartées pour coulisser librement sur la vis puis rapprochées pour que le filetage de l'écrou coopère avec le filetage de la vis.

5. Dispositif de distribution selon l'une quelconque des revendications précédentes **caractérisé en ce que** le piston porte une jupe pour épouser au mieux la paroi interne du stator.

6. Dispositif de distribution selon l'une quelconque des revendications précédentes **caractérisé en ce que** le piston est apte à se déformer élastiquement sous l'action d'une force perpendiculaire au plan du piston.

7. Dispositif de distribution selon l'une quelconque des revendications 2 à 6 **caractérisé en ce que** le bord inférieur des ailettes forme un contre couteau.

8. Dispositif de distribution selon la revendication 7 **caractérisé en ce que** le bord inférieur des ailettes présente des ergots limitant le rapprochement de la grille de coupe.

9. Dispositif de distribution selon l'une quelconque des revendications précédentes **caractérisé en ce que** le piston présente sur sa face supérieure un bossage traversée par la vis.

10. Dispositif de distribution selon l'une quelconque des revendications précédentes **caractérisé en ce que** le couvercle présente dans sa face interne une empreinte de guidage de la vis.

## Claims

1. Device for dispensing frozen culinary herbs in fragments, comprising a rotor (2) at the base provided with a cutting grate (2A) guided in rotation on a stator (3) forming a hollow body bounding a chamber (4) designed to accommodate the culinary herbs, a plunger (5) locked onto the stator during rotation and co-operating with a driving screw joined to the rotor during rotation in order to push the culinary herbs towards the grate, the device being **characterised in that** the top of the stator is closed by a removable lid (7) and the plunger has means (8) enabling said plunger to be locked on the stator during rotation whilst coupling it with the driving screw without axially displacing the driving screw in order to extract it from the stator.

2. Dispensing device as claimed in claim 1, **characterised in that** the plunger is locked during rotation by rotating the plunger and engaging at least one notch (9) provided in the periphery of the plunger with a radial fin (10) extending from the internal face of the stator, which is cylindrical in revolution, this engagement being produced by elastic deformation.

3. Dispensing device as claimed in claim 2, **characterised in that** the internal face (5A) of the plunger has bosses (11) for pre-engaging the locking means during rotation.

4. Dispensing device as claimed in claim 1, **characterised in that** the plunger is provided with a nut split into at least two parts which can be moved apart so as to slide freely on the screw and then moved back together so that the thread of the nut co-operates with the thread of the screw.

5. Dispensing device as claimed in any one of the preceding claims, **characterised in that** the plunger carries a skirt in order to conform as far as possible in shape to the internal wall of the stator.

6. Dispensing device as claimed in any one of the preceding claims, **characterised in that** the plunger is designed to deform elastically under the action of a force perpendicular to the plane of the plunger.

7. Dispensing device as claimed in any one of claims 2 to 6, **characterised in that** the bottom edge of the fins forms a blade backstop.

8. Dispensing device as claimed in claim 7, **characterised in that** the bottom edge of the fins has lugs limiting the spacingdistance of the cutting grate.

9. Dispensing device as claimed in any one of the preceding claims, **characterised in that** the plunger has a boss on its top face through which the screw extends.

10. Dispensing device as claimed in any one of the preceding claims, **characterised in that** the lid has an indentation in its internal face for guiding the screw.

## Patentansprüche

1. Vorrichtung zur zerkleinerten Ausgabe tiefgefrorener Kräuter, enthaltend am Boden einen Rotor (2), der mit einem Schneidegitter (2A) versehen ist, der an einem Stator in seiner Drehung geführt wird (3) und einen Hohlkörper bildet, der eine Kammer (4) für die Aufnahme der Kräuter begrenzt, einen Kolben (5), der an dem Stator in seiner Drehung verriegelt ist und mit einer Antriebsspindel zusammenwirkt, die drehfest mit dem Rotor verbunden ist, um die Kräuter in Richtung des Gitters zu drücken, wobei die Vorrichtung **dadurch gekennzeichnet ist, dass** die Oberseite des Stators durch einen abnehmbaren Deckel (7) geschlossen ist und der Kolben Mittel (8) aufweist, mit denen sich der Kolben in seiner Drehung an dem Stator sperren lässt, indem er mit der Antriebsspindel gekoppelt wird, ohne die Antriebsspindel in axialer Richtung zu verschieben, um sie aus dem Stator herauszuziehen.

2. Ausgabevorrichtung nach Anspruch 1, **dadurch gekennzeichnet, dass** die Drehsperrung des Kolbens durch Drehung des Kolbens und durch Eingriff zumindest einer Einkerbung (9), die in dem Umfang des Kolbens vorgesehen ist, mit einer radialen Rippe (10), die sich von der rotationszylindrischen Innenseite des Stators erstreckt, erfolgt, wobei der Eingriff durch elastische Verformung erhalten wird.

3. Ausgabevorrichtung nach Anspruch 2, **dadurch gekennzeichnet, dass** die Innenseite (5A) des Kolbens Höcker (11) aufweist für einen Voreingriff der Drehverriegelung.

4. Ausgabevorrichtung nach Anspruch 1, **dadurch gekennzeichnet, dass** der Kolben mit einer Mutter versehen ist, die in zumindest zwei Teile aufgespaltet ist, die voneinander abgespreizt werden können, um frei auf der Spindel verschoben und anschließend zusammengeführt zu werden, damit das Gewinde der Mutter mit dem Gewinde der Spindel zusammenwirkt.

5. Ausgabevorrichtung nach einem der vorangehenden Ansprüche, **dadurch gekennzeichnet, dass** der Kolben eine Schürze trägt, um sich bestmöglich an die innere Wandung des Stators anzupassen.

6. Ausgabevorrichtung nach einem der vorangehenden Ansprüche, **dadurch gekennzeichnet, dass** der Kolben dafür geeignet ist, sich unter der Einwirkung einer zu der Ebene des Kolbens senkrechten Kraft elastisch zu verformen.

7. Ausgabevorrichtung nach einem der Ansprüche 2 bis 6, **dadurch gekennzeichnet, dass** der untere Rand der Rippen ein Kontermesser bildet.

8. Ausgabevorrichtung nach Anspruch 7, **dadurch gekennzeichnet, dass** der untere Rand der Rippen Vorsprünge für die Begrenzung der Annäherung des Schneidegitters aufweist.

9. Ausgabevorrichtung nach einem der vorangehenden Ansprüche, **dadurch gekennzeichnet, dass** der Kolben an seiner oberen Seite einen Höcker aufweist, der von der Spindel durchsetzt wird.

10. Ausgabevorrichtung nach einem der vorangehenden Ansprüche, **dadurch gekennzeichnet, dass** der Deckel an seiner Innenseite eine Vertiefung für die Führung der Spindel aufweist.
